# FASCICULE DE BREVET EUROPEEN

(11) **EP 1 894 796 B1**
(45) Date de publication et mention de la délivrance du brevet: **21.11.2012**
(21) Numéro de dépôt: 07114193.1
(22) Date de dépôt: 10.08.2007
(51) Int. Cl.: B60R 25/02

(54) **Rotor de verrou à barillet rotatif integrant un palpeur de clé**
Zylinderschloss mit einer Schlüsselabtasteinrichtung
Cylinder lock with a key decoding device

(30) Priorité: 28.08.2006 FR 0607562
(43) Date de publication de la demande: 05.03.2008
(73) Titulaire: Valeo Sécurité Habitacle, 94046 Créteil Cedex (FR)
(72) Inventeur: GIACOMIN, FABRICE, VALEO SECURITE HABITACLE, 94042, CRETEIL CEDEX (FR); PERRIN, CHRISTOPHE, VALEO SECURITE HABITACLE, 94042, CRETEIL CEDEX (FR)
(74) Mandataire: Jacquot, Ludovic R. G.

(56) Documents cités:
- EP-A1- 0 631 912
- EP-A2- 0 335 712
- WO-A-01/74635
- DE-A1- 4 136 568

## Description

La présente invention concerne un rotor de verrou à barillet rotatif, dans lequel est intégré un palpeur de clé, c'est-à-dire un organe permettant de détecter la présence d'une clé insérée axialement à l'intérieur dudit rotor.

L'invention trouve une application particulièrement avantageuse, mais non exclusive, dans le domaine des antivols de direction pour véhicules automobiles.

Un verrou à barillet rotatif est schématiquement composé d'un rotor monté mobile en rotation axiale à l'intérieur d'un stator, et de moyens de verrouillage à même de bloquer le mouvement rotatif en question. L'ensemble est agencé de manière à ce que l'activation et/ou la désactivation des moyens de verrouillage, ainsi que l'entraînement en rotation du rotor, s'effectuent à l'aide d'une clé.

Dans des applications de type antivol de direction, comme par exemple dans le document EP 0 335 712, les verrous sont généralement équipés d'un organe à même de détecter la présence d'une clé insérée axialement à l'intérieur du rotor, afin le cas échéant de pouvoir commander le verrouillage de certaines mobilités du mécanisme de blocage de la colonne de direction. Un tel organe de détection se présente habituellement sous la forme d'un levier monté pivotant à l'intérieur d'un logement latéral, qui est ménagé directement dans le corps du rotor. Il est à noter que dans la pratique, l'ensemble est généralement agencé de manière à ce que l'organe de détection demeure toujours solidaire du rotor, ceci afin de constituer un sous-ensemble autonome manipulable indépendamment du reste du verrou.

La demande de brevet européen EP 1 268 243 décrit notamment un levier en forme de U dont les deux branches sont élastiquement déformables, et supportent deux tourillons à leurs extrémités respectives. Le montage d'un tel organe de détection dans le rotor s'opère classiquement par emboîtement des tourillons dans deux paliers ménagés à l'intérieur du logement, après déformation élastique des branches.

Ce type d'assemblage présente toutefois l'inconvénient de générer des problèmes d'usure au niveau de la clé, et conséquemment des risques de blocage intempestif de la colonne de direction même si ladite clé est correctement insérée dans le rotor du verrou. En effet, la capacité de déformation élastique de l'organe de détection provient habituellement de la nature du matériau qui le compose. Or il s'agit généralement de matière plastique, c'est-à-dire d'un matériau relativement abrasif de par la présence de fibres de verre.

Pour remédier à cette difficulté, il est bien entendu possible d'employer un organe de détection métallique, par exemple en zamak, que l'on monte pivotant par l'intermédiaire d'une goupille servant à la fois d'axe de rotation et de moyens de maintien sur le rotor.

L'inconvénient avec ce genre d'assemblage est qu'il nécessite une ou plusieurs pièces supplémentaires, ce qui entraîne un surcoût significatif tant au niveau matière que montage, ainsi qu'un accroissement non négligeable des risques de défauts.

Par ailleurs, il est connu qu'un verrou à barillet rotatif peut avantageusement intégrer un élément de blindage au niveau de la partie avant du rotor, dans le but de renforcer sa résistance à l'effraction, notamment par perforation. Il s'agit en général d'une sorte de pastille en acier ou en carbure, qui prend place dans un logement ménagé transversalement dans la partie avant du rotor, et qui comporte un trou traversant destiné au passage de la clé.

Enfin, il est aussi relativement courant que la face avant d'un rotor de verrou rotatif soit recouverte d'un élément de masquage. Pour des raisons essentiellement esthétiques, il peut en effet s'avérer intéressant de cacher la face avant du rotor, à l'exception bien entendu de l'entrée destinée à l'insertion de la clé. Habituellement, l'élément de masquage consiste en une sorte de capot en inox qui est serti directement sur le rotor.

Quoi qu'il en soit, le problème technique à résoudre par l'objet de la présente invention, est de proposer un rotor de verrou rotatif comprenant un logement latéral dans lequel est monté mobile en pivotement un organe de détection destiné à indiquer la présence d'une clé insérée axialement à l'intérieur du rotor, un logement transversal dans lequel prend place un élément de blindage chargé de renforcer la résistance structurelle de la partie avant du rotor, ainsi qu'une face avant recouverte d'un élément de masquage, rotor qui permettrait d'éviter les problèmes de l'état de la technique en étant notamment sensiblement moins onéreux à fabriquer, tout en offrant un niveau de fiabilité accru.

La solution au problème technique posé consiste, selon la présente invention, en ce que le l'organe de détection est apte à être introduit librement dans le logement latéral suivant une direction d'insertion et avec une position d'insertion qui sont sensiblement uniques, en ce que l'élément de blindage est apte à limiter le pivotement de l'organe de détection dans le logement latéral à une pluralité de positions angulaires contiguës qui sont toutes distinctes de la position d'insertion, et en ce que l'élément de masquage est apte à bloquer l'élément de blindage à l'intérieur du logement transversal.

Il est entendu que le fait que l'organe de détection puisse être introduit librement dans le logement latéral, signifie que son insertion ne nécessite aucune déformation élastique de la structure dudit organe et/ou de celle du rotor.

On précise par ailleurs que la position d'insertion désigne la position relative de l'organe de détection par rapport au rotor, au moment précis de l'insertion.

L'invention telle qu'ainsi définie présente l'avantage de pouvoir disposer d'un rotor dont l'organe de détection est parfaitement solidaire, et ce en employant un principe d'assemblage qui dans la pratique s'avère à la fois peu onéreux à mettre en oeuvre et d'une grande fiabilité d'utilisation.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
La figure 1 est un éclaté en perspective arrière qui représente un rotor de verrou rotatif conforme à l'invention.
La figure 2 illustre en perspective latérale l'organe de détection en début de phase de montage dans le rotor.
La figure 3 constitue une vue similaire à la figure 2, mais en vue de côté.
La figure 4 montre en perspective et en coupe longitudinale partielle, l'organe de détection en cours de phase de montage dans le rotor.
La figure 5 est une vue analogue à la figure 4 mais en coupe longitudinale totale.
La figure 6 constitue une vue similaire à la figure 5, mais en fin de phase de montage.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

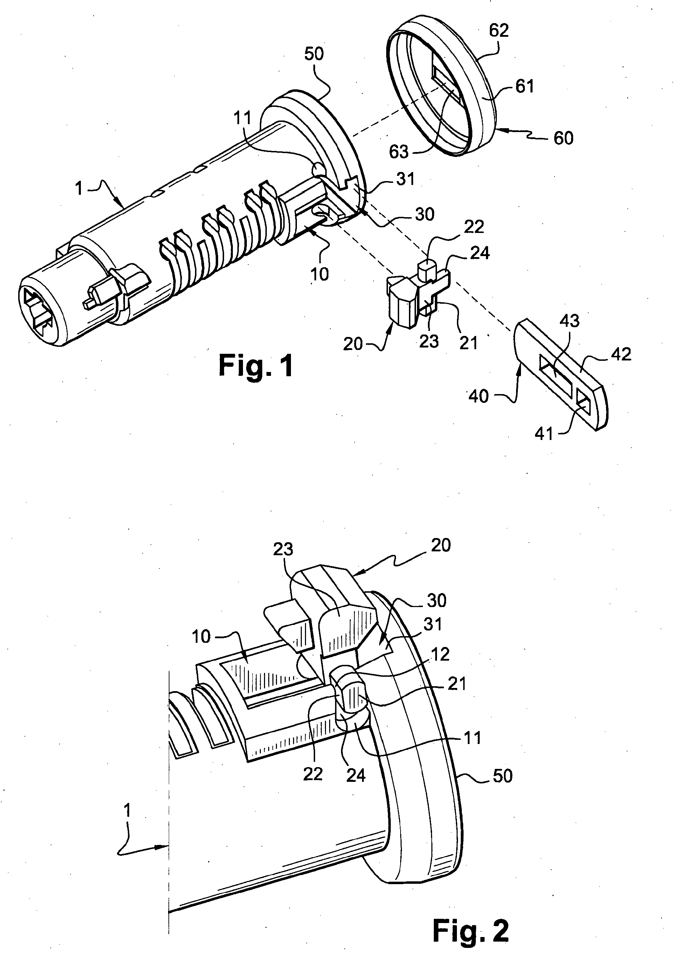

La figure 1 illustre un rotor 1 de verrou rotatif, qui est destiné à être monté dans un dispositif antivol de direction d'un véhicule automobile.

Ce rotor 1 comporte tout d'abord un logement latéral 10 dans lequel est monté mobile en pivotement un organe de détection 20 qui est destiné à indiquer la présence d'une clé insérée axialement. Le rotor 1 comprend ensuite un logement transversal 30 dans lequel prend place un élément de blindage 40 qui est chargé de renforcer la résistance structurelle de sa partie avant. Enfin, le rotor 1 dispose d'un élément de masquage 60 qui est à même de cacher sa face avant 50, à l'exception de l'entrée destinée à l'insertion de la clé. Cet élément de masquage 60 contribue à l'esthétique de la face avant du verrou et de manière non limitative, permet ici le maintien de l'élément de blindage 40.

Conformément à l'objet de la présente invention, l'organe de détection 20 est en mesure d'être introduit librement dans le logement latéral 10, suivant une direction et une position d'insertion qui sont toutes deux sensiblement uniques. L'élément de blindage 40 est quant à lui à même de limiter le pivotement de l'organe de détection 20 dans le logement latéral 10 à une pluralité de positions angulaires contiguës qui sont toutes distinctes de la position d'insertion. Par ailleurs, l'élément de masquage 60 est en ce qui le concerne apte à bloquer l'élément de blindage 40 à l'intérieur du logement transversal 30.

Ainsi qu'on peut le voir notamment aux figures 1 à 3, l'organe de détection 20 est doté de deux tourillons coaxiaux 21 sur chacun desquels sont ménagés axialement deux méplats 22 qui s'étendent parallèlement l'un à l'autre. Par ailleurs, le logement latéral 10 est pourvu de deux paliers en forme de trous cylindriques 11 ouverts radialement. L'ensemble est agencé de manière à ce que la largeur de chaque ouverture radiale 12 soit sensiblement égale à la distance séparant les deux méplats 22 du tourillon correspondant 21, tandis que le diamètre intérieur de chaque trou cylindrique 11 est choisi de façon à être sensiblement égal au diamètre extérieur de la portion cylindrique du tourillon correspondant 21 de manière à réaliser correctement le guidage en rotation.

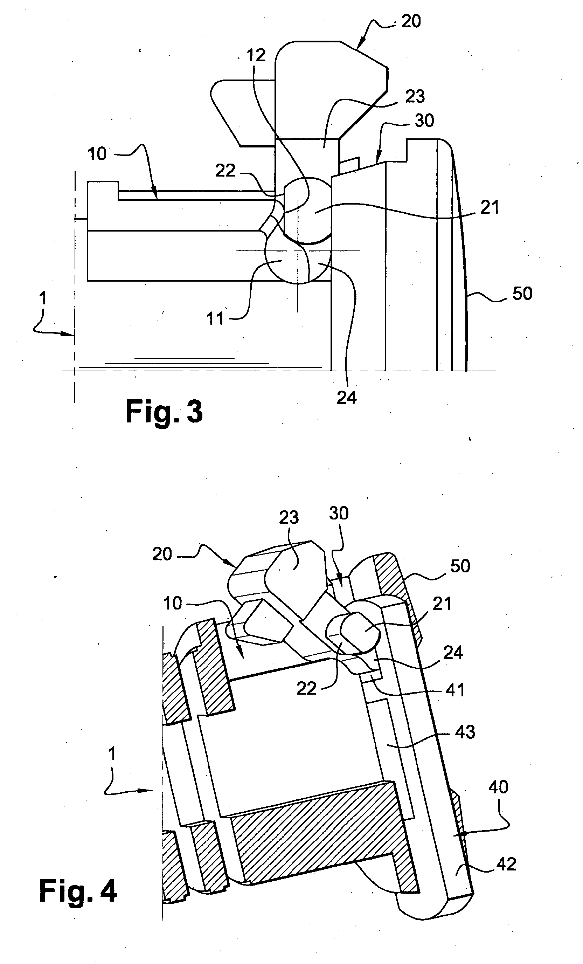

Selon une particularité de l'invention visible aux figures 2 et 3, l'organe de détection 20 est ici en mesure d'être introduit dans le logement latéral 10 suivant une direction d'insertion qui est sensiblement radiale par rapport à l'axe de rotation du rotor 1.

Selon une autre particularité de l'invention également visible, l'organe de détection 20 est par ailleurs à même d'être introduit dans le logement latéral 10 avec une position d'insertion sensiblement perpendiculaire à l'axe du rotor 1. Cette caractéristique permet de bien différencier la position d'insertion, des futures positions d'utilisation de l'organe de détection 20 qui seront plutôt parallèles à l'axe du rotor 1.

Dans ce mode particulier de réalisation, choisi uniquement à titre d'exemple, l'organe de détection 20 est concrètement constitué par un levier 23 le long duquel sont ménagés transversalement les deux tourillons coaxiaux 21.

Ainsi qu'on peut l'observer cette fois sur les figures 4 à 6, l'élément de blindage 40 comporte un logement de blocage 41 à l'intérieur duquel une partie de l'organe de détection 20 est en mesure de se déplacer en cas de pivotement. L'ensemble est par ailleurs agencé de manière à ce que les parties du rotor 1 qui délimitent le logement 41 suivant le plan de déplacement de l'organe de détection 20, soient à même de coopérer par contact bloquant avec ledit organe de détection 20.

Il est entendu ici que les formes, les dimensions et le positionnement relatif de l'organe de détection 20 et du logement de blocage 41, permettent de fixer précisément l'orientation et l'amplitude angulaire du mouvement de pivotement.

L'ensemble est quoi qu'il en soit toujours agencé de manière à ce que logement de blocage 41 soit en mesure de limiter le pivotement de l'organe de détection 20, de telle sorte que ce dernier ne puisse adopter que des positions angulaires dans lesquelles les méplats 22 de ses tourillons 21 soient systématiquement orientés dans des directions distinctes de la direction d'insertion. La pérennité de l'assemblage entre l'organe de détection 20 et le logement latéral 10 est ainsi obtenue.

On observe par ailleurs que la partie de l'organe de détection 20, qui est destinée à se déplacer à l'intérieur du logement de blocage 41, se présente ici sous la forme d'un doigt 24 qui s'étend sensiblement suivant l'axe du levier 23, et donc de manière sensiblement perpendiculaire à l'axe de rotation dudit organe de détection 20.

De manière particulièrement avantageuse, l'insertion de l'organe de détection 20 dans le logement de blocage 41 s'opère simultanément à l'introduction de l'élément de blindage 40 dans le logement transversal 30.

Conformément à une autre caractéristique avantageuse de l'invention, le logement de blocage 41 est un trou traversant ou en encoche.

Dans cet exemple de réalisation, l'élément de blindage 40 est concrètement constitué par un plat 42 en acier, comportant en outre un trou traversant 43 sensiblement central qui est destiné au passage de la clé associé au verrou rotatif.

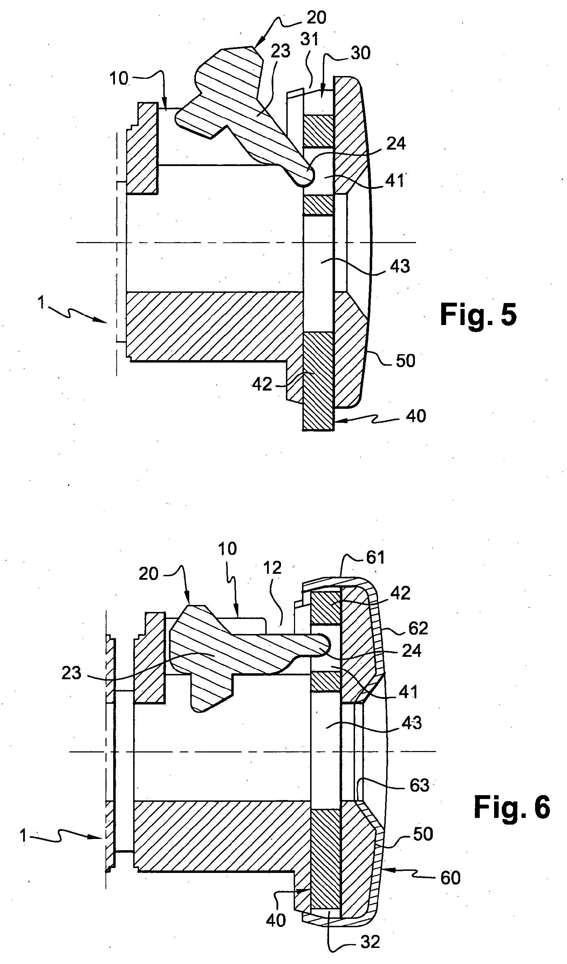

Ainsi qu'on peut le voir à la figure 6, l'élément de masquage 60 est doté d'un rebord 61 qui s'étend en regard des deux ouvertures 31, 32 du logement transversal 30. Cette caractéristique permet d'assurer le blocage de l'élément de blindage 40 au sein du rotor 1, et conséquemment de garantir le maintien de l'organe de détection 20 par rapport audit rotor 1.

Dans ce mode particulier de réalisation, l'élément de masquage 60 est concrètement constitué par un capot 62 en inox, qui est pourvu d'un trou traversant central 63 destiné au passage de la clé et qui est serti sur la partie la plus avant du rotor 1, par l'intermédiaire du rebord 61 servant à immobiliser l'élément de blindage 40 et aussi ici à fixer l'élément de masquage 60 sur le rotor 1.

Bien entendu, l'invention concerne également tout verrou rotatif comprenant un rotor 1 tel que précédemment décrit.

Mais de manière encore plus générale, l'invention est en outre relative à tout dispositif de blocage de direction intégrant un tel verrou rotatif.

## Revendications

1. Rotor (1) de verrou rotatif comprenant un logement latéral (10) dans lequel est monté mobile en pivotement un organe de détection (20) destiné à indiquer la présence d'une clé insérée axialement à l'intérieur du rotor (1), un logement transversal (30) dans lequel prend place un élément de blindage (40) chargé de renforcer la résistance structurelle de la partie avant du rotor (1), ainsi qu'une face avant (50) recouverte d'un élément de masquage (60), **caractérisé en ce que** l'organe de détection (20) est apte à être introduit librement dans le logement latéral (10) suivant une direction d'insertion et avec une position d'insertion qui sont sensiblement uniques, **en ce que** l'élément de blindage (40) est apte à limiter le pivotement de l'organe de détection (20) dans le logement latéral (10) à une pluralité de positions angulaires contiguës qui sont toutes distinctes de la position d'insertion, et **en ce que** l'élément de masquage (60) est apte à bloquer l'élément de blindage (40) à l'intérieur du logement transversal (30).

2. Rotor (1) selon la revendication 1, **caractérisé en ce que** l'organe de détection (20) comporte deux tourillons coaxiaux (21) sur chacun desquels sont ménagés axialement deux méplats (22) s'étendant parallèlement l'un à l'autre, et **en ce que** le logement latéral (10) comporte deux paliers en forme de trous cylindriques (11) ouverts radialement, la largeur de chaque ouverture radiale (12) étant sensiblement égale à la distance séparant les deux méplats (22) du tourillon correspondant (21), le diamètre intérieur de chaque trou cylindrique (11) étant sensiblement égal au diamètre extérieur de la portion cylindrique du tourillon correspondant (21).

3. Rotor (1) selon l'une des revendications 1 ou 2, **caractérisé en ce que** l'organe de détection (20) est apte à être introduit dans le logement latéral (10) suivant une direction d'insertion sensiblement radiale par rapport au rotor (1).

4. Rotor (1) selon l'une quelconque des revendications 1 à 3, **caractérisé en ce que** l'organe de détection (20) est apte à être introduit dans le logement latéral (10) avec une position d'insertion sensiblement perpendiculaire à l'axe du rotor (1).

5. Rotor (1) selon au moins la revendication 2, **caractérisé en ce que** l'organe de détection (20) est constitué par un levier (23) le long duquel sont ménagés transversalement les deux tourillons coaxiaux (21).

6. Rotor (1) selon l'une quelconque des revendications 1 à 5, **caractérisé en ce que** l'élément de blindage (40) comporte un logement de blocage (41) à l'intérieur duquel une partie de l'organe de détection (20) est en mesure de se déplacer en cas de pivotement, et **en ce que** les parties du rotor (1) qui délimitent le logement (41) suivant le plan de déplacement de l'organe de détection (20), sont à même de coopérer par contact bloquant avec ledit organe de détection (20).

7. Rotor (1) selon la revendication 6, **caractérisé en ce que** l'insertion de l'organe de détection (20) dans le logement de blocage (41) s'opère simultanément à l'introduction de l'élément de blindage (40) dans le logement transversal (30).

8. Rotor (1) selon l'une des revendications 6 ou 7, **caractérisé en ce que** le logement de blocage (41) est un trou traversant.

9. Rotor (1) selon l'une quelconque des revendications 6 à 8, **caractérisé en ce que** la partie de l'organe de détection (20), qui est destinée à se déplacer à l'intérieur du logement de blocage (41), est constituée par un doigt (24) qui s'étend de manière sensiblement perpendiculaire à l'axe de rotation dudit organe de détection (20).

10. Rotor (1) selon l'une quelconque des revendications 1 à 9, **caractérisé en ce que** l'élément de blindage (40) est constitué par un plat (42) qui est par ailleurs doté d'un trou traversant (43) destiné au passage de la clé.

11. Rotor (1) selon l'une quelconque des revendications 1 à 10, **caractérisé en ce que** l'élément de masquage (60) comporte un rebord (61) s'étendant en regard de chaque ouverture (31, 32) du logement transversal (30).

12. Verrou à barillet rotatif, **caractérisé en ce qu'**il comporte un rotor (1) selon l'une quelconque des revendications précédentes.

13. Dispositif de blocage de direction **caractérisé en ce qu'**il comporte un verrou à barillet rotatif selon la revendication précédente.

## Claims

1. Cylinder lock rotor (1) comprising a lateral housing (10) in which is pivot mounted a detection member (20) intended to indicate the presence of a key inserted axially into the rotor (1), a transverse housing (30) in which there sits a shielding element (40) the task of which is to enhance the structural strength of the front part of the rotor (1), and a front face (50) covered with a concealing element (60), **characterized in that** the detection member (20) can be inserted freely into the lateral housing (10) in a direction of insertion and with a position of insertion which are more or less unique, **in that** the shielding element (40) is able to limit the pivoting of the detection member (20) in the lateral housing (10) to a plurality of contiguous angular positions which are all different from the position of insertion, and **in that** the concealing element (60) is able to block the shielding element (40) inside the transverse housing (30).

2. Rotor (1) according to Claim 1, **characterized in that** the detection member (20) comprises two coaxial trunnions (21) on each of which two flats (22) running parallel to one another are formed axially, and **in that** the lateral housing (10) comprises two bearings in the form of radially open cylindrical holes (11), the width of each radial opening (12) being substantially equal to the distance separating the two flats (22) of the corresponding trunnion (21), the inside diameter of each cylindrical hole (11) being substantially equal to the outside diameter of the cylindrical portion of the corresponding trunnion (21).

3. Rotor (1) according to either of Claims 1 and 2, **characterized in that** the detection member (20) can be introduced into the lateral housing (10) in a direction of insertion that is substantially radial in relation to the rotor (1).

4. Rotor (1) according to any one of Claims 1 to 3, **characterized in that** the detection member (20) can be introduced into the lateral housing (10) with a position of insertion substantially perpendicular to the axis of the rotor (1).

5. Rotor (1) according to at least Claim 2, **characterized in that** the detection member (20) consists of a lever (23) along which the two coaxial trunnions (21) are formed transversally.

6. Rotor (1) according to any one of Claims 1 to 5, **characterized in that** the shielding element (40) comprises a blocking housing (41) inside which part of the detection member (20) is capable of moving in the event of pivoting, and **in that** those parts of the rotor (1) that delimit the housing (41) in the plane of travel of the detection member (20) are able to engage with the said detection member (20) through blocking contact.

7. Rotor (1) according to Claim 6, **characterized in that** the insertion of the detection member (20) into the blocking housing (41) occurs at the same time as the introduction of the shielding element (40) into the transverse housing (30).

8. Rotor (1) according to one of Claims 6 and 7, **characterized in that** the blocking housing (41) is a through-hole.

9. Rotor (1) according to any one of Claims 6 to 8, **characterized in that** that part of the detection member (20) that is intended to move inside the blocking housing (41) consists of a finger (24) extending substantially perpendicular to the axis of rotation of the said detection member (20).

10. Rotor (1) according to any one of Claims 1 to 9, **characterized in that** the shielding element (40) consists of a flat (42) which is also provided with a through-hole (43) through which the key is intended to pass.

11. Rotor (1) according to any one of Claims 1 to 10, **characterized in that** the concealing element (60) has a rim (61) extending past each opening (31, 32) of the transverse housing (30).

12. Rotary cylinder lock, **characterized in that** it comprises a rotor (1) according to any one of the preceding claims.

13. Steering lock device **characterized in that** it comprises a rotary cylinder lock according to the preceding claim.

## Patentansprüche

1. Rotor (1) eines Drehriegels, der eine seitliche Aufnahme (10), in der ein Erfassungsorgan (20) schwenkbeweglich montiert ist, das dazu bestimmt ist, das Vorhandensein eines axial in den Rotor (1) eingeführten Schlüssels anzuzeigen, eine Queraufnahme (30), in die sich ein Abschirmelement (40) einfügt, das den strukturellen Widerstand des vorderen Teils des Rotors (1) verstärken soll, sowie eine Vorderseite (50) enthält, die von einem Verdeckungselement (60) bedeckt wird, **dadurch gekennzeichnet, dass** das Erfassungsorgan (20) gemäß einer Einführrichtung und mit einer Einführstellung, die im Wesentlichen einzigartig sind, frei in die seitliche Aufnahme (10) eingeführt werden kann, dass das Abschirmelement (40) das Schwenken des Erfassungsorgans (20) in der seitlichen Aufnahme (10) auf mehrere aneinandergrenzende Winkelstellungen begrenzen kann, die sich alle von der Einführstellung unterscheiden, und dass das Verdeckungselement (60) das Abschirmelement (40) im Inneren der Queraufnahme (30) blockieren kann.

2. Rotor (1) nach Anspruch 1, **dadurch gekennzeichnet, dass** das Erfassungsorgan (20) zwei koaxiale Drehzapfen (21) aufweist, auf jedem von denen axial zwei Abflachungen (22) ausgebildet sind, die sich parallel zueinander erstrecken, und dass die seitliche Aufnahme (10) zwei Lager in Form radial offener, zylindrischer Löcher (11) aufweist, wobei die Breite jeder radialen Öffnung (12) im Wesentlichen gleich dem Abstand ist, der die zwei Abflachungen (22) des entsprechenden Drehzapfens (21) trennt, wobei der Innendurchmesser jedes zylindrischen Lochs (11) im Wesentlichen gleich dem Außendurchmesser des zylindrischen Abschnitts des entsprechenden Drehzapfens (21) ist.

3. Rotor (1) nach einem der Ansprüche 1 oder 2, **dadurch gekennzeichnet, dass** das Erfassungsorgan (20) gemäß einer bezüglich des Rotors (1) im Wesentlichen radialen Einführrichtung in die seitliche Aufnahme (10) eingeführt werden kann.

4. Rotor (1) nach einem der Ansprüche 1 bis 3, **dadurch gekennzeichnet, dass** das Erfassungsorgan (20) mit einer Einführstellung im Wesentlichen lotrecht zur Achse des Rotors (1) in die seitliche Aufnahme (10) eingeführt werden kann.

5. Rotor (1) nach mindestens Anspruch 2, **dadurch gekennzeichnet, dass** das Erfassungsorgan (20) aus einem Hebel (23) besteht, entlang dessen die zwei koaxialen Drehzapfen (21) in Querrichtung ausgebildet sind.

6. Rotor (1) nach einem der Ansprüche 1 bis 5, **dadurch gekennzeichnet, dass** das Abschirmelement (40) eine Blockieraufnahme (41) aufweist, in deren Innerem ein Teil des Erfassungsorgans (20) sich im Fall eines Schwenkens verschieben kann, und dass die Teile des Rotors (1), die die Aufnahme (41) gemäß der Verschiebeebene des Erfassungsorgans (20) begrenzen, in der Lage sind, durch blockierenden Kontakt mit dem Erfassungsorgan (20) zusammenzuwirken.

7. Rotor (1) nach Anspruch 6, **dadurch gekennzeichnet, dass** das Einführen des Erfassungsorgans (20) in die Blockieraufnahme (41) gleichzeitig mit der Einführung des Abschirmelements (40) in die Queraufnahme (30) ausgeführt wird.

8. Rotor (1) nach einem der Ansprüche 6 oder 7, **dadurch gekennzeichnet, dass** die Blockieraufnahme (41) ein Durchgangsloch ist.

9. Rotor (1) nach einem der Ansprüche 6 bis 8, **dadurch gekennzeichnet, dass** der Teil des Erfassungsorgans (20), der dazu bestimmt ist, sich im Inneren der Blockieraufnahme (41) zu verschieben, aus einem Finger (24) besteht, der sich im Wesentlichen lotrecht zur Drehachse des Erfassungsorgans (20) erstreckt.

10. Rotor (1) nach einem der Ansprüche 1 bis 9, **dadurch gekennzeichnet, dass** das Abschirmelement (40) aus einem Flacheisen (42) besteht, das außerdem mit einem Durchgangsloch (43) versehen ist, das für den Durchgang des Schlüssels bestimmt ist.

11. Rotor (1) nach einem der Ansprüche 1 bis 10, **dadurch gekennzeichnet, dass** das Verdeckungselement (60) eine Randleiste (61) aufweist, die sich gegenüber jeder Öffnung (31, 32) der Queraufnahme (30) erstreckt.

12. Riegel mit drehbarem Schließzylinder, **dadurch gekennzeichnet, dass** er einen Rotor (1) nach einem der vorhergehenden Ansprüche aufweist.

13. Lenkverriegelungsvorrichtung, **dadurch gekennzeichnet, dass** sie einen Riegel mit drehbarem Schließzylinder nach dem vorhergehenden Anspruch aufweist.
